# EUROPÄISCHE PATENTSCHRIFT

(11) **EP 3 080 573 B1**
(45) Veröffentlichungstag und Bekanntmachung des Hinweises auf die Patenterteilung: **13.12.2017**
(21) Anmeldenummer: 14783594.6
(22) Anmeldetag: 08.10.2014
(51) Int. Cl.: B29D 30/06, G01M 1/26, G01M 17/02

(54) **VERFAHREN ZUR DURCHFÜHRUNG EINER AUTOMATISIERTEN MARKIERUNG EINES HOCHPUNKTES AN EINEM FAHRZEUGREIFEN**
METHOD FOR PERFORMING AN AUTOMATED MARKING OF A HIGH POINT ON A VEHICLE TIRE
PROCÉDÉ PERMETTANT D'EFFECTUER UN MARQUAGE AUTOMATISÉ D'UN POINT HAUT SUR UN PNEU DE VÉHICULE

(30) Priorität: 13.12.2013 DE 102013225891
(43) Veröffentlichungstag der Anmeldung: 19.10.2016
(73) Patentinhaber: Continental Reifen Deutschland GmbH, 30165 Hannover (DE)
(72) Erfinder: BASTEIN, Manfred, D-30855 Langenhagen (DE); LOURENCO, Pedro, 4600-069 Amarante (PT); BLECH, Manfred, 30657 Hannover (DE)
(74) Vertreter: Widjaja, Wira
(86) Internationale Anmeldenummer: PCT/EP2014/071499
(87) Internationale Veröffentlichungsnummer: WO 2015/086187

(56) Entgegenhaltungen:
- EP-A2- 1 087 220

## Beschreibung

Die Erfindung betrifft ein Verfahren zur Durchführung einer automatisierten Markierung eines Hochpunktes an einem Fahrzeugreifen.

*Ein solches Verfahren ist beispielsweise aus der* EP 1 087 220 A2 *bekannt. Bei diesem Verfahren wird ein Reifen, welcher auf seiner Seitenwand mit einem Barcode versehen ist, liegend auf einem Fördermittel zu einem "Barcodereader" befördert. Nach Einlesen des Barcodes wird der Reifen durch das Fördermittel, genauer durch zwei Transportbänder, welche in entgegengesetzte Richtungen laufen, derart in eine Drehbewegung versetzt, dass der Barcode auf der Mittellinie des Fördermittels liegt. Nachfolgend wird der Reifen über weitere Transportbänder zu einer Messmaschine zur Messung des Hochpunktes befördert. Mittels einer Fotosensorik werden die Transportbänder bzw. der Reifen gestoppt. Eine Felge wird an den Reifen heran- und ins Reifeninnere hineingefahren, sodass der Reifen auf der Felge aufsitzt. Der auf der Felge sitzende Reifen wird derart angehoben, dass sich der Reifen in Abhängigkeit seiner Massenverteilung neigt und der Hochpunkt mit einer Messeinrichtung ermittelt werden kann. Anschließend wird ein erster Winkel bestimmt, welcher von zwei Geraden eingeschlossen wird, nämlich einer ersten Geraden, die durch den "Reifenmittelpunkt" sowie in eine Referenzrichtung verläuft, und einer zweiten Geraden, die durch den "Reifenmittelpunkt" und den bereits ermittelten Hochpunkt verläuft. Nun wird eine Markierungsvorrichtung um den ersten Winkel verfahren und es wird der Hochpunkt markiert. Anscjließend wird ein weiterer Winkel bestimmt, welcher dem ersten Winkel plus 90° entspricht und Auskunft über die Lage des Hochpunktes gegenüber dem Barcode gibt.*

Bei der Herstellung von Fahrzeugreifen wird im Allgemeinen am Ende eine Ungleichförmigkeitsvermessung am Reifen durchgeführt. Bei dieser Vermessung wird u.a. festgestellt, an welcher Position sich der Hochpunkt am Fahrzeugreifen befindet. Bei der Reifenmontage wird später der Felgenhochpunkt mit dem Tiefpunkt der Fahrzeugfelge abgeglichen. Im Normalfall erfolgt die Markierung des Hochpunktes des Fahrzeugreifens direkt an der Messmaschine zur Ermittlung der Massenverteilung bzw. Ungleichförmigkeitsverteilung des Fahrzeugreifens. Das Kennzeichnen des Fahrzeugreifens direkt an der Messmaschine ist mit unterschiedlichen Nachteilen verbunden.

Der Erfindung lag die Aufgabe zugrunde, ein Verfahren bereitzustellen, mit dem herkömmliche Methoden zum Kennzeichnen des Hochpunktes an Fahrzeugreifen verbessert werden.

Gelöst wird die Aufgabe durch ein Verfahren nach Anspruch 1 mit folgenden nacheinander ablaufenden Schritten:
a) Messung der Position des Hochpunktes an einem Fahrzeugreifen mit einer Messmaschine bei der die Ungleichförmigkeitsverteilung des Fahrzeugreifens ermittelt wird,
b)Anordnen des Fahrzeugreifens auf einem Fördermittel,
   wobei der Fahrzeugreifen so auf dem Fördermittel ausgerichtet wird, dass der Hochpunkt und der axiale Mittelpunkt des Fahrzeugreifens im Wesentlichen auf einer Mittellinie des Fördermittels liegen,
c) Erstellen einer Foto- oder Videoaufnahme des auf dem Fördermittel anliegenden Fahrzeugreifens,
   wobei mit der Foto- oder Videoaufnahme die relative Winkelposition des Hochpunktes des Fahrzeugreifens in Bezug auf einen auf der Seitenwand angeordneten Identifikationsmittel gemessen und in einem Datenspeicher abgespeichert wird,
d) Transportieren des Fahrzeugreifens zu einer automatisierten Markierungsstation,
e) Markieren des gemessenen Hochpunktes am Fahrzeugreifen mit der automatisierten Markierungsstation, wobei die Position des Hochpunktes am Fahrzeugreifen über die im Datenspeicher abgelegte Winkelposition bestimmt und nachfolgend der Fahrzeugreifen an dieser Winkelposition mit einer optischen Markierung versehen wird.

Ein Vorteil der Erfindung ist insbesondere darin zu sehen, dass durch das erfindungsgemäße Verfahren die Kennzeichnung des Hochpunktes am Fahrzeugreifen außerhalb der Messmaschine zur Ermittlung der Massenverteilung durchgeführt werden kann. Beide Verfahrensschritte, die Messung des Hochpunktes und die Kennzeichnung des Hochpunktes am Fahrzeugreifen, werden durch das Verfahren entkoppelt. Die Kennzeichnung des Hochpunktes am Fahrzeugreifen erfolgt erst zu einem späteren Zeitpunkt mit der automatisierten Markierungsstation. Dadurch muss die Messmaschine mit keinerlei Vorrichtungen zur Markierung des Fahrzeugreifens ausgestattet werden. Außerdem wird der Zyklus zur Vermessung des Fahrzeugreifens an der Messmaschine deutlich erhöht. Ein weiterer Vorteil des Verfahrens besteht darin, dass mit der Winkelvermessung gemäß Schritt c) die Position des Hochpunktes mit einer hohen Genauigkeit vermessen und abgespeichert wird. Dadurch kann zu einem späteren Zeitpunkt auf einfache Weise bestimmt werden, an welcher Position sich der Hochpunkt am Fahrzeugreifen befindet. Die automatisierte Markierungsstation besitzt außerdem den Vorteil, dass die Markierungen am Fahrzeugreifen mit einer hohen Geschwindigkeit durchgeführt werden können.

In einer vorteilhaften Weiterbildung der Erfindung ist vorgesehen, dass bei Schritt d) das Identifikationsmittel ein Barcode ist, wobei der Barcode reifenspezifische Informationen enthält. Dadurch lässt sich die Winkelvermessung des Hochpunktes am Fahrzeugreifen mit einer hohen Genauigkeit durchführen. Der Barcode lässt sich mit einer digitalen Bildverarbeitungssoftware relativ einfach identifizieren.

In einer weiteren vorteilhaften Weiterbildung der Erfindung ist vorgesehen, dass der Fahrzeugreifen nach Schritt b) auf dem Fördermittel entlang der Mittellinie des Fördermittels transportiert wird, wobei der Fahrzeugreifen vor Schritt c) an einer Lichtschranke kurzeitig gestoppt wird, um nachfolgend die Foto- oder Videoaufnahme des Fahrzeugreifen zu erstellen. Dadurch kann die Winkelvermessung des Hochpunktes am Fahrzeugreifen mit einer hohen Genauigkeit durchgeführt werden. Der Fahrzeugreifen stoppt auf dem Fördermittel immer in einer gleichen Position.

In einer weiteren vorteilhaften Weiterbildung der Erfindung ist vorgesehen, dass bei Schritt c) das Aufzeichnungsgerät für die Foto- oder Videoaufnahme über dem axialen Mittelpunkt des liegenden Fahrzeugreifens positioniert ist. Auf diese Weise wird die Winkelvermessung des Hochpunktes am Fahrzeugreifen in Bezug auf den Barcode mit einer hohen Genauigkeit durchgeführt.

In einer weiteren vorteilhaften Weiterbildung der Erfindung ist vorgesehen, dass bei Schritt c) die Bestimmung der relativen Winkelposition des Hochpunktes des Fahrzeugreifens mit einer Bildverarbeitungssoftware erfolgt. Mit der Bildverarbeitungssoftware lässt sich der Hochpunkt des Fahrzeugreifens mit einer kurzen Zykluszeit bestimmen und abspeichern.

In einer weiteren vorteilhaften Weiterbildung der Erfindung ist vorgesehen, dass das Fördermittel zwei Förderbänder umfasst, wobei der Fahrzeugreifen in einem liegenden Zustand auf den beiden Förderbändern verfahren wird. Dadurch lässt sich die Winkelvermessung des Hochpunktes am Fahrzeugreifen mit einer hohen Geschwindigkeit durchführen.

In einer weiteren vorteilhaften Weiterbildung der Erfindung ist vorgesehen, dass die automatisierte Markierung des Hochpunktes am Fahrzeugreifen bei Schritt e) räumlich und zeitlich von der Messung des Hochpunktes bei Schritt a) getrennt ist. Auf diese Weise können beide Verfahrensschritte völlig unabhängig voneinander durchgeführt werden. Denkbar ist beispielsweise, dass die Fahrzeugreifen nach Schritt c) zunächst über einen längeren Zeitraum zwischengelagert werden.

In einer weiteren vorteilhaften Weiterbildung der Erfindung ist vorgesehen, dass die automatisierte Markierungsstation unterschiedliche Markierungsvorrichtungen umfasst, wobei der Fahrzeugreifen mit den Markierungsvorrichtungen an unterschiedlichen Positionen mit unterschiedlichen Markierungen gekennzeichnet werden kann. Die Fahrzeughersteller haben unterschiedliche Anforderungen an die Markierungspunkte am Fahrzeugreifen. Die automatisierte Markierungsstation kann sich einfach und schnell an die unterschiedlichen Anforderungen anpassen und die Markierung an den entsprechenden Stellen am Fahrzeugreifen anordnen.

An einem Ausführungsbeispiel soll die Erfindung nachfolgend erläutert werden. Es zeigt:
- Fig. 1: einen Fahrzeugreifen auf einem Fördermittel in der Aufsicht
- Fig. 2: den Fahrzeugreifen mit dem Fördermittel in einer Seitenansicht.

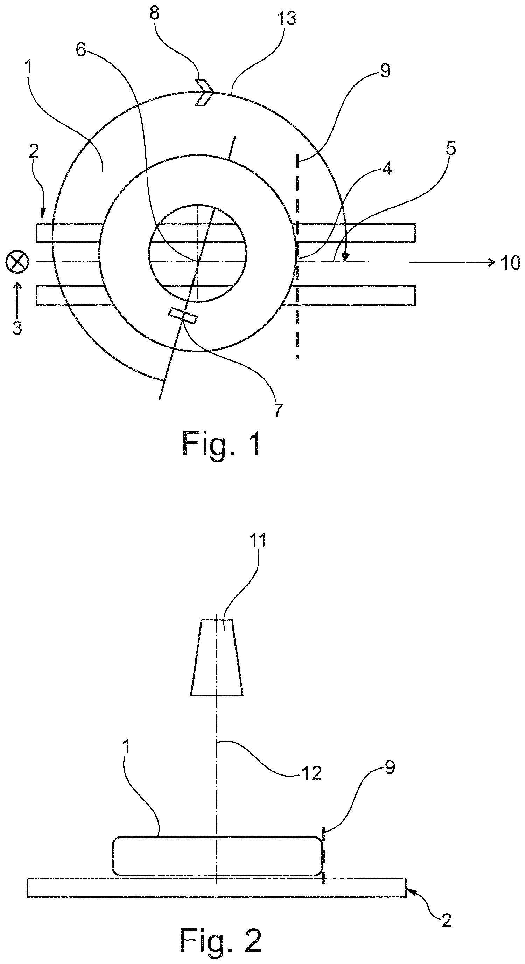

Fig. 1 zeigt einen Fahrzeugreifen 1 mit dem Fördermittel 2 in einer Aufsicht. Zunächst erfolgt eine Messung der Position des Hochpunktes an dem Fahrzeugreifen mit einer Messmaschine, die beispielsweise an der Position 3 vor dem Fördermittel 2 steht. Anschließend wird der Fahrzeugreifen so auf das Fördermittel 2 aufgelegt, dass sich der Hochpunkt 4 am Fahrzeugreifen im Wesentlichen auf der Mittellinie 5 des Fördermittels befindet. Der axiale Mittelpunkt 6 des Fahrzeugreifens 1 wird ebenfalls so auf dem Fördermittel 2 ausgerichtet, dass er sich ebenfalls auf der Mittellinie 5 befindet. Anschließend wird der Fahrzeugreifen 1 in Förderrichtung 10 zur Lichtschranke 9 transportiert. An der Lichtschranke 9 wird der Fahrzeugreifen 1 in der dargestellten Position kurz gestoppt. In dieser Position erfolgt die Foto- oder Videoaufnahme mit einer Videokamera, die über dem Fahrzeugreifen 1 angeordnet ist. Auf der Seitenwand des Fahrzeugreifens befindet sich ein Barcode 7, der im Normalfall nach der Reifenfertigung auf der Seitenwand angebracht wird. Mit einer Bildverarbeitungssoftware wird anschließend das aufgenommene Bild ausgewertet, wobei die relative Winkelposition des Barcodes im Hinblick auf die Position des Hochpunktes 4 bestimmt wird. Bei dem dargestellten Ausführungsbeispiel beträgt die Winkelposition des Barcodes in etwa 270 Grad bezogen auf die Position 4 des Hochpunktes am Fahrzeugreifen. Die Winkelposition 13 wird im Normalfall in immer gleicher Richtung, vorzugsweise im Uhrzeigersinn 8, vermessen. Anschließend wird die Winkelposition 13 des Hochpunktes in Bezug auf den Barcode 7 in einem Datenspeicher abgespeichert.

Anschließend wird der Fahrzeugreifen 1 zunächst zwischengelagert oder direkt zur nicht dargestellten automatisierten Markierungsstation transportiert. An der automatisierten Markierungsstation erfolgt die endgültige Markierung des Hochpunktes am Fahrzeugreifen. Die Position des Hochpunktes 4 am Fahrzeugreifen wird aus dem Datenspeicher wieder ausgelesen und anschließend wird der Fahrzeugreifen an der entsprechenden Stelle markiert. Bei der Markierung des Fahrzeugreifens mit dem Hochpunkt dient die Position des Barcodes 7 als Bezugspunkt.

Fig. 2 zeigt den Fahrzeugreifen 1 mit dem Fördermittel 2 in einer Seitenansicht. Die Fotooder Videokamera 11 wird bei der Bestimmung des Hochpunktes des Fahrzeugreifens direkt über der axialen Mittelachse 12 des Fahrzeugreifens positioniert. Der Fahrzeugreifen 1 wird an der Lichtschranke 9 in der dargestellten Position kurz gestoppt, um die Winkelvermessung am Fahrzeugreifen durchführen zu können.

### Bezugszeichenliste

- 1: Fahrzeugreifen
- 2: Fördermittel mit zwei einzelnen Förderbändern
- 3: Position der Messmaschine zur Vermessung der Massenverteilung
- 4: Position des Hochpunktes an dem Fahrzeugreifen
- 5: Mittellinie des Fördermittels
- 6: Axialer Mittelpunkt des Fahrzeugreifens
- 7: Position des Barcodes auf der Seitenwand des Fahrzeugreifens
- 8: Richtungsangabe für Winkelvermessung des Hochpunktes in Bezug auf die Position des Barcodes (im Uhrzeigersinn)
- 9: Lichtschranke
- 10: Förderrichtung
- 11: Foto- oder Videokamera
- 12: Axiale Mittelachse des Fahrzeugreifens
- 13: Winkelposition

## Patentansprüche

1. Verfahren zur Durchführung einer automatisierten Markierung eines Hochpunktes an einem Fahrzeugreifen mit folgenden nacheinander ablaufenden Schritten:
a) Messung der Position (4) des Hochpunktes an einem Fahrzeugreifen (1) mit einer Messmaschine bei der die Ungleichformigkeitsverteilung des Fahrzeugreifens (1) ermittelt wird,
b)Anordnen des Fahrzeugreifens (1) auf einem Fördermittel (2),
wobei der Fahrzeugreifen (1) so auf dem Fördermittel (2) ausgerichtet wird, dass der Hochpunkt und der axiale Mittelpunkt (6) des Fahrzeugreifens (1) auf einer Mittellinie (5) des Fördermittels (2) liegen,
c) Erstellen einer Foto- oder Videoaufnahme des auf dem Fördermittel (2) anliegenden Fahrzeugreifens (1),
wobei mit der Foto- oder Videoaufnahme die relative Winkelposition (13) des Hochpunktes des Fahrzeugreifens (1) in Bezug auf einen auf der Seitenwand angeordneten Identifikationsmittel (7) gemessen und in einem Datenspeicher abgespeichert wird,
d) Transportieren des Fahrzeugreifens (1) zu einer automatisierten Markierungsstation,
e) Markieren des gemessenen Hochpunktes am Fahrzeugreifen mit der automatisierten Markierungsstation,
wobei die Position (4) des Hochpunktes am Fahrzeugreifen (1) über die im Datenspeicher abgelegte Winkelposition (13) bestimmt und nachfolgend der Fahrzeugreifen (1) an dieser Winkelposition (13) mit einer optischen Markierung versehen wird.

2. Verfahren nach Anspruch 1,
**dadurch gekennzeichnet, dass**
bei Schritt d) das Identifikationsmittel (7) ein Barcode ist,
wobei der Barcode (7) reifenspezifische Informationen enthält.

3. Verfahren nach einem der vorhergehenden Ansprüche,
**dadurch gekennzeichnet, dass**
der Fahrzeugreifen (1) nach Schritt b) auf dem Fördermittel (2) entlang der Mittellinie (5) des Fördermittels (2) transportiert wird,
wobei der Fahrzeugreifen (1) vor Schritt c) an einer Lichtschranke (9) kurzeitig gestoppt wird, um nachfolgend die Foto- oder Videoaufnahme des Fahrzeugreifen (1) zu erstellen.

4. Verfahren nach einem der vorhergehenden Ansprüche,
**dadurch gekennzeichnet, dass**
bei Schritt c) das Aufzeichnungsgerät (11) für die Foto- oder Videoaufnahme über dem axialen Mittelpunkt (6) des liegenden Fahrzeugreifens (1) positioniert ist.

5. Verfahren nach einem der vorhergehenden Ansprüche,
**dadurch gekennzeichnet, dass**
bei Schritt c) die Bestimmung der relativen Winkelposition (13) des Hochpunktes des Fahrzeugreifens mit einer Bildverarbeitungssoftware erfolgt.

6. Verfahren nach einem der vorhergehenden Ansprüche,
**dadurch gekennzeichnet, dass**
das Fördermittel (2) zwei Förderbänder umfasst,
wobei der Fahrzeugreifen (1) in einem liegenden Zustand auf den beiden Förderbändern verfahren wird.

7. Verfahren nach einem der vorhergehenden Ansprüche,
**dadurch gekennzeichnet, dass**
die automatisierte Markierung des Hochpunktes am Fahrzeugreifen bei Schritt e) räumlich und zeitlich von der Messung des Hochpunktes bei Schritt a) getrennt ist.

8. Verfahren nach einem der vorhergehenden Ansprüche,
**dadurch gekennzeichnet, dass**
die automatisierte Markierungsstation unterschiedliche Markierungsvorrichtungen umfasst,
wobei der Fahrzeugreifen (1) mit den Markierungsvorrichtungen an unterschiedlichen Positionen mit unterschiedlichen Markierungen gekennzeichnet werden kann.

## Claims

1. Method for carrying out automated marking of a high point on a vehicle tyre, having the following steps which occur in succession:
a) measuring the position (4) of the high point on a vehicle tyre (1) with a measuring machine on which the distribution of irregularities of the vehicle tyre (1) is determined,
b) arranging the vehicle tyre (1) on a conveyor means (2),
wherein the vehicle tyre (1) is oriented on the conveyor means (2) in such a way that the high point and the axial centre point (6) of the vehicle tyre (1) lie on a centre line (5) of the conveyor means (2),
c) producing a photographic recording or video recording of the vehicle tyre (1) which rests on the conveyor means (2),
wherein the relative angular position (13) of the high point of the vehicle tyre (1) with respect to an identification means (7) arranged on the side wall is measured with the photographic recording or video recording and stored in a data memory,
d) transporting the vehicle tyre (1) to an automated marking station,
e) marking the measured high point on the vehicle tyre with the automated marking station,
wherein the position (4) of the high point on the vehicle tyre (1) is determined by means of the angular position (13) stored in the data memory, and the vehicle tyre (1) is subsequently provided with an optical mark at this angular position (13).

2. Method according to Claim 1,
**characterized in that**
in step d) the identification means (7) is a barcode, wherein the barcode (7) contains tyre-specific information.

3. Method according to one of the preceding claims,
**characterized in that**
after step b) the vehicle tyre (1) is transported on the conveyor means (2), along the centre line (5) of the conveyor means (2),
wherein before step c) the vehicle tyre (1) is briefly stopped at a photoelectric barrier (9) in order subsequently to produce the photographic recording or video recording of the vehicle tyre (1).

4. Method according to one of the preceding claims,
**characterized in that**
in step c) the recording device (11) for the photographic recording or video recording is positioned over the axial centre point (6) of the horizontal vehicle tyre (1).

5. Method according to one of the preceding claims,
**characterized in that**
in step c) the relative angular position (13) of the high point of the vehicle tyre is determined with image-processing software.

6. Method according to one of the preceding claims,
**characterized in that**
the conveyor means (2) comprises two conveyor belts, wherein the vehicle tyre (1) is moved in a horizontal state on the two conveyor belts.

7. Method according to one of the preceding claims,
**characterized in that**
the automated marking of the high point on the vehicle tyre in step e) is spatially and chronologically separated from the measurement of the high point in step a).

8. Method according to one of the preceding claims,
**characterized in that**
the automated marking station comprises different marking devices,
wherein the vehicle tyre (1) can be characterized with different marks at different positions with the marking devices.

## Revendications

1. Procédé en vue de réaliser un marquage automatique du point haut d'un bandage de roue de véhicule, le procédé comportant la succession d'étapes ci-dessous :
a) mesure de la position (4) du point haut d'un bandage (1) de roue de véhicule à l'aide d'une machine de mesure tout en déterminant la répartition des irrégularités du bandage (1) de roue de véhicule,
b) placement du bandage (1) de roue de véhicule sur un moyen de transport (2), le bandage (1) de roue de véhicule étant aligné sur le moyen de transport (2) de telle sorte que le point haut et le centre axial (6) du bandage (1) de roue de véhicule soient situés sur une ligne centrale (5) du moyen de transport (2),
c) enregistrer par photo ou vidéo le bandage (1) de roue de véhicule placé sur le moyen de transport (2), l'enregistrement photo ou vidéo mesurant la position angulaire relative (13) du point haut du bandage (1) de roue de véhicule par rapport à un moyen d'identification (7) disposé sur la paroi latérale et étant conservé dans une mémoire de données,
d) transport du bandage (1) de roue de véhicule vers un poste automatique de marquage,
e) marquage du point haut mesuré sur le bandage de roue de véhicule dans le poste de marquage automatique, la position (4) du point haut du bandage (1) de roue de véhicule étant déterminée par l'intermédiaire de la position angulaire (13) conservée dans la mémoire de données et le bandage (1) de roue de véhicule étant ensuite doté d'un marquage optique en cette position angulaire (13).

2. Procédé selon la revendication 1, **caractérisé en ce qu'**à l'étape d), le moyen d'identification (7) est un code à barres, le code (7) à barres contenant des informations spécifiques au bandage de roue.

3. Procédé selon l'une des revendications précédentes, **caractérisé en ce qu'**après l'étape b), le bandage (1) de roue de véhicule est transporté sur le moyen de transport (2) le long de la ligne centrale (5) du moyen de transport (2), le bandage (1) de roue de véhicule étant arrêté brièvement avant l'étape c) devant une barrière lumineuse (9) avant d'ensuite réaliser l'enregistrement photo ou vidéo du bandage (1) de roue de véhicule.

4. Procédé selon l'une des revendications précédentes, **caractérisé en ce qu'**à l'étape c), l'appareil de désignation (11) est placé pour l'enregistrement photo ou vidéo au-dessus du centre axial (6) du bandage (1) de roue de véhicule couché.

5. Procédé selon l'une des revendications précédentes, **caractérisé en ce qu'**à l'étape c), la détermination de la position angulaire relative (13) du point haut du bandage de roue de véhicule s'effectue à l'aide d'un logiciel de traitement d'images.

6. Procédé selon l'une des revendications précédentes, **caractérisé en ce que** le moyen de transport (2) comporte deux bandes transporteuses, le bandage (1) de roue de véhicule étant déplacé en position couchée sur les deux bandes transporteuses.

7. Procédé selon l'une des revendications précédentes, **caractérisé en ce que** le marquage automatique du point haut du bandage de roue de véhicule à l'étape e) est séparé spatialement et temporellement de la mesure du point haut à l'étape a).

8. Procédé selon l'une des revendications précédentes, **caractérisé en ce que** le poste automatique de marquage comporte différents dispositifs de marquage et **en ce que** le bandage (1) de roue de véhicule peut être **caractérisé par** le dispositif de marquage par différents marquages en différentes positions.
